Europäisches Patentamt

European Patent Office

Office européen des brevets

(19)

(11) Publication number: **0 125 149**
A1

(12) **EUROPEAN PATENT APPLICATION**

(21) Application number: **84303175.8**

(22) Date of filing: **10.05.84**

(51) Int. Cl.³: **F 16 L 21/08**
**F 16 L 21/02**

(30) Priority: **10.05.83 ZA 833313**

(43) Date of publication of application:
**14.11.84 Bulletin 84/46**

(84) Designated Contracting States:
**AT BE CH DE FR GB IT LI LU NL SE**

(71) Applicant: **Welgemoed, Gerald Martin**
**24 Julia Road Meadowbrook**
**Germiston Transvaal(ZA)**

(72) Inventor: **Welgemoed, Gerald Martin**
**24 Julia Road Meadowbrook**
**Germiston Transvaal(ZA)**

(74) Representative: **Kyle, Diana et al,**
**ELKINGTON AND FIFE High Holborn House 52/54 High**
**Holborn**
**London WC1V 6SH(GB)**

(54) **Connectors.**

(57) A connector (10, 30) for connecting together two pieces (12, 14; 46, 48), comprising a hollow tubular body (18; 32) into the ends of which the said parts (12, 14; 46, 48) are respectively to be inserted, "O"-ring seals (22; 36) at each end of the body (18; 32) adapted respectively to seal (22; 36) against the pipes (12, 14; 46, 48) and securing means (24; 40) adapted to secure the body (18; 32) to at least one of the said pipes (12, 14; 46, 48). The securing means (24; 40) may be grub screws, if the body is of metal, or a plastic securing device at each end of the body (18; 32) if the latter is of plastic.

FIG.1

EP 0 125 149 A1

- 1 -

## CONNECTORS

This invention relates to connectors. The invention is concerned in particular with such connectors for connecting together two parts, normally hollow cylindrical parts such as tubes, that are adapted to carry therethrough fluent material and in particular hydraulic fluid.

According to one aspect of the invention there is provided a connector comprising a hollow body into the ends of which the said parts are respectively to be inserted, a sealing ring at each end of the body adapted respectively to seal against a said part inserted into that end, and securing means adapted to secure the body to one of the said parts and preferably respectively to both the said parts.

The hollow body is preferably a cylindrical tube. The sealing ring is preferably an "O"-ring. The securing means may be grub screws passing through the body and being adapted to engage the parts especially when the hollow body is a comprises metal. The hollow body may comprise a plastics material in which case the securing means may comprise plastics end pieces that are attached to the hollow body.

According to another aspect of the invention there is provided the combination of a connector as set forth above with a pair of parts, preferably pipes, wherein the parts are inserted respectively into the opposite ends of the hollow body, wherein the sealing means seal against the said parts respectively and wherein at least one of the said parts are connected to the hollow body by the said securing means.

According to a further aspect of the invention there is provided a method of connecting together the ends of two pipes, the method comprising inserting the ends of the pipes respectively into opposite ends of a hollow body of a connector as set out above and by means of the securing means securing the hollow body to the said ends of the pipes.

Two embodiments of the invention will now be described by way of example with reference to the accompanying drawings.

In the drawings:-

Figure 1 is an exploded partially sectioned view of a connector of the invention and the ends of two pipes to which it is to be connected, and

Figure 2 is a similar view of a modified connector of the invention.

Referring now to the drawings there is shown a connector 10 of the invention located in position between the ends 12 and 14 of two water carrying pipes 16 which in this embodiment are metal underground water pipes used in a domestic dwelling for conveying water from the mains to the dwelling.

The connector 10 comprises a mild steel, cylindrical tubular body member 18 having a pair of internal grooves 20 near each end. Fitting within the grooves are respectively a pair of "O"-ring seals 22 of such dimensions that they are held in the grooves 20. On the outer sides of each of the grooves 20 are a number (conveniently three) of tapped bores in which are received grub screws 24.

The ends 12 and 14 of the pipes 16, which are clean and preferably sandpapered or ground smooth, are inserted into the ends of the member 18 until they are engaged by the "O"-ring seals 22 and are thereafter pushed somewhat deeper into the member 18. By means of the grub screws 24, each end of the body 10 is secured to the pipe ends 12 and 14.

It will be understood that the connector 10 oan with advantage be used where an underground domestic water carrying pipe has been inadvertently punctured e.g. by a garden fork. In such circumstances, the connector is used as follows:- the pipe 16 is parted on a plane that is normal to the pipe axis and that passes through the puncture. The ends of the pipe are then cleaned and sandpapered to be substantially smooth and inserted into the and secured to the body as has been described above. The "O"-ring seals 22 will now seal against the outside surfaces of the the pipe ends 12 an 14. The grub screws 24, which act as securing means, are now tightened to bite into the material of the pipe ends to secure the connector 10 to these pipe ends.

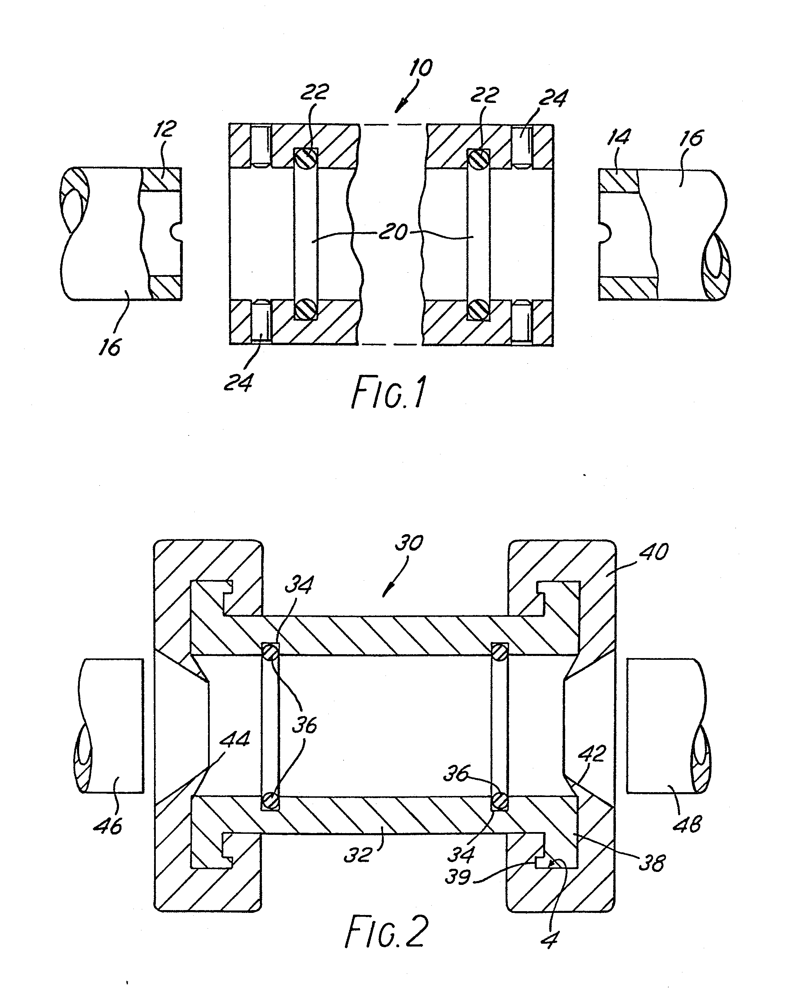

Reference is now made to Figure 2 wherein is shown a modified connector 30 of the invention. The connector 30 comprises a plastic, cylindrical tubular body member 32 having a pair of internal grooves 34 near each end. Fitting within the grooves are respectively a pair of "O"-ring seals 36 of such dimensions that they are held in the grooves 34. Each end of the body member 32 is provided respectively with a low flange 38 having a low rearwardly directed lip 39. A securing member 40 is provided at each end of the body member 32.

The securing member 40 comprises a slightly flexible, hard plastic ring having a re-entrant groove 41 at its radially outward position which engages the end of the body member 32 and the flange 38 thereon so as to hold the securing member 40 firmly thereto. The securing member 40 is provided with an frusto-conical lip 42 which is of converging cross-section, which has a sharp end 44 and which projects into the bore through the body member 32.

The connector 30 is used in generally the same manner as the connector 10 but with plastics pipes 46 and 48. The ends of these pipes are respectively inserted into the body member 32 deflecting the lips 42 on insertion. The "O"-rings 36 seal against the outer surfaces of the pipes 46 and 48. Should any force be applied to the pipes to tend to draw them apart or out of the body member 32, each lip 42 will tend to expand and the sharp end 44 will dig into the surface of the poipe which it surrounds. This will prevent the pipe from being withdrawn from the body member 44.

I have found that the above described arrangements provide a substantially permanent water-tight connection between for example two ends of a domestic water carrying pipe. I have also found that they provide an adequate connector for other pipes which carry fluid and in particular water up to a pressure of in the region of about 100kPa (approx 150 psi). Up to such pressures, at least, I have found that the securing means (either the grub screws 24 or the securing members 40) provide adequate securing forces to prevent the plastics pipes being forced out of the body member.

The invention is not limited to the precise constructional details hereinbefore described and illustrated in the drawings.

I CLAIM:-

0125149

1. A connector for connecting together two parts, comprising

    a) a hollow body into the ends of which the said parts are respectively to be inserted,

    b) a sealing ring at each end of the body adapted respectively to seal against the said part inserted into that end, and

    c) securing means adapted to secure the body to at least one of the said parts.

2 A connector as claimed in claim 1 wherein the hollow body is a cylindrical tube.

3. A connector as claimed in claim 2 wherein the cylindrical tube comprises metal and wherein the securing means comprise grub screws passing through the body and being adapted to engage the said parts.

4. A connector as claimed in claim 2 wherein the securing means comprises an end piece that is attached to the hollow body and has an inwardly directed frusto-conical lip through which a part can be inserted into the hollow body and which which is adapted to engage the outer surface of the said part.

5. The combination of a connector as claimed in claim 1 with a pair of parts wherein the parts are inserted respectively into the opposite ends of the hollow body, wherein the sealing means respectively seal against the said parts and wherein at least one of the parts is connected to the hollow body by the said securing means.

6. A method of connecting together the ends of two pipes, the method comprising inserting the ends of the pipes respectively into opposite ends of a hollow body of a connector as claimed in claim 1 and by means of the securing means, securing the hollow body to the said ends of the pipes.

FIG.1

FIG.2

European Patent Office

**EUROPEAN SEARCH REPORT**

**0125149**
Application number

| | DOCUMENTS CONSIDERED TO BE RELEVANT | EP 84303175.8 | |
|---|---|---|---|
| Category | Citation of document with indication, where appropriate, of relevant passages | Relevant to claim | CLASSIFICATION OF THE APPLICATION (Int. Cl. ³) |
| X | <u>DE - A - 1 925 171</u> (WM. PARK & CO.)<br>* Fig. 1,2 * | 1,2,4,<br>5,6 | F 16 L 21/08<br>F 16 L 21/02 |
| X | <u>AT - B - 232 329</u> (COMP. PARISIENNE D'OUTILLAGE....)<br>* Totality * | 1,2,3,<br>5,6 | |
| P,X | <u>DE - A1 - 3 214 885</u> (HOLTROP)<br>* Abstract; fig. 1-4 * | 1,2,4,<br>5,6 | |
| X | <u>DE - B - 1 750 710</u> (FOUQUET-WERK)<br>* Totality * | 1,4,5,<br>6 | |
| P,X | <u>US - A - 4 397 485</u> (WOOD)<br>* Totality * | 1,3,5,<br>6 | TECHNICAL FIELDS SEARCHED (Int. Cl. ³)<br><br>F 16 L |
| Y | <u>DE - A1 - 2 842 227</u> (SCHUCK)<br>* Fig. 1-4 * | 1,2 | |
| Y | <u>AT - B - 204 339</u> (A. MAGNANI)<br>* Totality * | 1,2 | |
| A | <u>FR - A1 - 2 442 392</u> (FORGES DE BELLES ONDES)<br>* Fig. 1 * | | |

The present search report has been drawn up for all claims

| Place of search | Date of completion of the search | Examiner |
|---|---|---|
| VIENNA | 01-08-1984 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent

Office

**EUROPEAN SEARCH REPORT**

| | DOCUMENTS CONSIDERED TO BE RELEVANT | | CLASSIFICATION OF THE APPLICATION (Int Cl.) |
|---|---|---|---|
| Category | Citation of document with indication, where appropriate, of relevant passages | Relevant to claim | |
| A | US – A – 3 682 503 (BLOOM) <br> * Fig. 1 * <br><br> –––– | | |

TECHNICAL FIELDS SEARCHED (Int. Cl.)

EPO Form 1503.2  06.78